# EUROPEAN PATENT SPECIFICATION

(11) **EP 1 355 103 B1**
(45) Date of publication and mention of the grant of the patent: **10.10.2018**
(21) Application number: 03388020.4
(22) Date of filing: 03.04.2003
(51) Int. Cl.: F16L 59/14, B32B 1/08

(54) **Preinsulated pipe**
Vorisoliertes Rohr
Tuyau pré-insulé

(30) Priority: 05.04.2002 DK 200200504
(43) Date of publication of application: 22.10.2003
(73) Proprietor: Logstor A/S, 9670 Løgstør (DK)
(72) Inventor: Kirkegaard, Kim S., 9000 Aalborg (DK)
(74) Representative: Zacco Denmark A/S

(56) References cited:
- EP-A- 0 960 723
- DE-A- 3 338 071
- DE-A1- 10 021 523

## Description

The present invention relates to pre-insulated pipes for e.g. district heating, district cooling etc., said pipe comprising a medium conveying pipe, an insulating material surrounding at least a part of the length of the medium conveying pipe and a jacket pipe at least partly surrounding the insulating material.

Such pre-insulated pipes are mostly used for any media at a temperature between -200°C and +315°C in order to provide insulation of different media e.g. for single-user heating and cooling systems.

During the years much effort has been done in designing new district heating pipes having increased initial as well as long term insulation properties, and at the same time keeping the production and material costs at a low level in order to provide the lowest possible operating costs for the owner of the district heating system.

An example of a prior art pipe, which somewhat increases insulation properties, can e.g. be found in EP0960723, which discloses a composite element comprising a gas permeation barrier, preferably of metal foil, i.e. a barrier layer not being permeable to water or water vapour.

DE10021523 also discloses a pipe for conducting liquid or gaseous with an outer polymeric pipe used as protection for an insulation layer.

Also, a production process for the production of district heating pipes having an enclosing tube made of plastic with PUR foam insulation below the plastic, and an inner medium-carrying pipe comprising a corrugated stainless steel pipe can be found in DE3338071.

One object of the present invention is to provide a pre-insulated pipe of the kind mentioned above, having increased insulation properties especially at a long term basis.

This is obtained by a pre-insulated pipe according to claim 1, where the pipe is characterized in that it comprises a layer of polymeric material at least partly surrounding the insulating material, the layer of polymeric material comprising at least one layer of a material or combination of materials being permeable to water or water vapour, and having significantly better properties than PE (polyethylene), for resistance against diffusion of oxygen and carbon dioxide, where said material or combination of materials includes at least the material EVOH (ethylene vinyl alcohol).

When producing district heating pipes it is very common to use foaming agents such as cyclopentane for producing of polymeric foam from e.g. polyurethane. In the finished foam the cell gas composition will contain a significant amount of carbon dioxide and pentane, where the carbon dioxide is primarily generated when e.g. isocyanate reacts with ambient water during the foaming process.

In known pre-insulated pipes, the jacket pipe is mostly made from PE or other materials, which are relatively open for diffusion of carbon dioxide. The carbon dioxide will over time diffuse out through the jacket and will be replaced by oxygen from the ambient air, which has poor insulation properties. It is thereby the diffusion properties from the PE jacket material, which governs the transportation of oxygen and carbon dioxide molecules through the jacket. PE materials, however, are known to have outstanding water vapour diffusion properties, and because PE is a relatively inexpensive polymer material having good mechanical properties, it is a good material for the jacket pipe, but also co-polymerizates ethylene and butyl acryl ate (EBA) are very suitable for this.

Especially medium conveying pipes made from polymer materials allow some water vapour to diffuse out from the medium conveying pipe and into the insulating material, where it may condensate and lead to water saturation of the cells in the insulation material, e.g. the polyurethane foam near the inner side of the jacket pipe. For this reason, it is advantageous to use materials for the jacket pipe, which allow the water vapour to escape from the insulation material.

By the invention according to claim 1 it is obtained that any water vapour is allowed to escape from the insulation material, but also that carbon dioxide is kept within the insulation material and thereby avoiding an amount of ambient oxygen to build up in the insulating material.

This effect will be significantly advantageous if the layer of polymeric material has a resistance against diffusion of oxygen and carbon dioxide being better than 5 times and preferably 10 times the same resistance for a similar layer of PE, the resistance being measured according to any accepted test methods such as ASTM F-1249-90: 38°C, 90%RH, ASTM D-3985-81, 23°C, 0%RH and DIN 53380 part 1 1982, 23°C, 0%RH.

The polymeric material may include one or more aiding materials, or carrier materials, such as OPA (oriented polyamide), PETP (polyethylene terephtalate), PE or a combination of these materials.

The polymeric material may be applied as a film or laminate comprising two or more layers of polymeric material such as OPA, PETP, PE or a combination thereof. Other existing polymeric materials may be applied or developed in order to obtain similar properties.

Examples of laminates that are sold today as standard merchandise, and which would satisfy the criteria according to the present invention might be PETP-EVOH/PE or OPA/PA-EVOH-PA/PE. Such laminates are commonly used today for packing or wrapping e.g. foodstuffs.

According to the invention, the jacket pipe itself may be made from the selected material, but in order to reduce the material costs of the pre-insulated pipe it is especially advantageous if the layer of polymeric is made from a film or foil having a thickness below 1 mm and preferably below 0,5 mm. In practise even films or foils having a thickness of 0,1 mm would create a satisfying barrier for oxygen and carbon dioxide.

In another embodiment, the material or film may be applied to the outside of the jacket pipe either by direct application or welding of a film to the outer side of the jacket pipe, or by spraying a layer of a suitable material on the jacket pipe.

In this relation, however, it is specifically advantageous if the film is arranged between the insulating material and the jacket pipe, because the film thereby affects all the insulating materials, and because the jacket pipe thereby protects the relatively thin film.

As mentioned above, such a film may be applied by spraying the material onto the inside of the jacket pipe.

The film may even be thick enough to provide the similar function as the ordinary PE jacket, as the polymeric film may be formed in such a way that the outer layer can be made from a weldable material in order to form an annulus in which the insulation material may be injected or positioned.

In a preferred embodiment of the invention, the film is applied onto the outer surface of the insulating material and/or onto the inner surface of the jacket pipe, because this would ensure a long lifetime for the film.

In this relation the film can have a layer of PE on at least one side for adhering the film to the insulating material and/or to the jacket pipe.

The invention is especially advantageous in use with medium conveying pipes made from e.g. PP (polypropylene), PB (polybutylene) or cross-linked PP or PE (PEX), PE, ABS (acrylonitrile butadiene styrene) or other suitable polymeric materials, e.g. such as mentioned above.

The jacket pipe is advantageously made from PE, or co-polymerizates of ethylene and butyl acryl ate (EBA), or any other polymeric material being permeable to water or water vapour.

As mentioned above, the insulating material may comprise a foamed polymeric material, such as polyurethane (PUR) or any polyurethane composition.

A further aspect involves a method of manufacturing a pre-insulated pipe, said pipe comprising a medium conveying pipe, an insulating material surrounding at least a part of the length of the medium conveying pipe and a jacket pipe at least partly surrounding the insulating material, where the pre-insulated pipe comprises a layer of polymeric material at least partly surrounding the insulating material, where the polymeric material comprises a laminate in the form of a sheet material, and where the jacket pipe is made in a process involving extrusion, and where the laminate is placed inside the extruded jacket pipe in a simultaneous operation including continuous folding, said folding involving that laminate is placed with overlapping side edges in a tubular shape, where at least a string of a melt able glue material is placed along and between the overlapping side edges, and that the side edges are joined by heating the glue, where said heating is provided by residual heat from the extrusion of the jacket pipe. In this way it is obtained that the laminate is completely closed by the glue and that further equipment for welding of the laminate is not necessary in the manufacture.

The melt able glue material may include a layer primarily comprising PE at the top and at the bottom sides of the laminate, such that when the side edges are overlapping and the top and the bottom PE layer are in contact at the overlap, where the side edges are joined by heating, said heating being provided by residual heat from the extrusion of the jacket pipe. In this way a laminate may be used, which is available as a standard product.

A further aspect of the invention involves use of a pre-insulated pipe according to the invention, where said pipe is integrated in a system providing district heating or district cooling.

### Example (with regard to units, see below)

As an example of a pre-insulated pipe utilising the advantages of the invention is a pipe comprising:
- a media pipe having 20 mm external diameter and 2 mm wall thickness. The media pipe is made from PEX placed concentrically inside
- a 77 mm external diameter PEHD (polyethylene high-density) jacket pipe with 2,2 mm wall thickness, where the space between the outside of the media pipe and the inside of the jacket pipe is pre-insulated with PUR foam, and
- a barrier layer between the PUR foam and the jacket pipe, said barrier having a total thickness of 119 my. The barrier is a laminate consisting of 50 my PE, 19 my PETP-PVDC and 50 my PE. The laminate has an oxygen transmission of 10 cm3/m2/24h/atm according to ASTM 3985-95 and a water vapour transmission of 3 g/m2/24h according to ISO 9932:1990.

The obtained development over time (years) in the lambda value is depicted in the chart below. As shown, the pipe including a barrier (full line) according to the invention is significantly better than a corresponding pipe without the barrier, which is shown as the dotted line. The development is calculated by use of standard engineering methods.

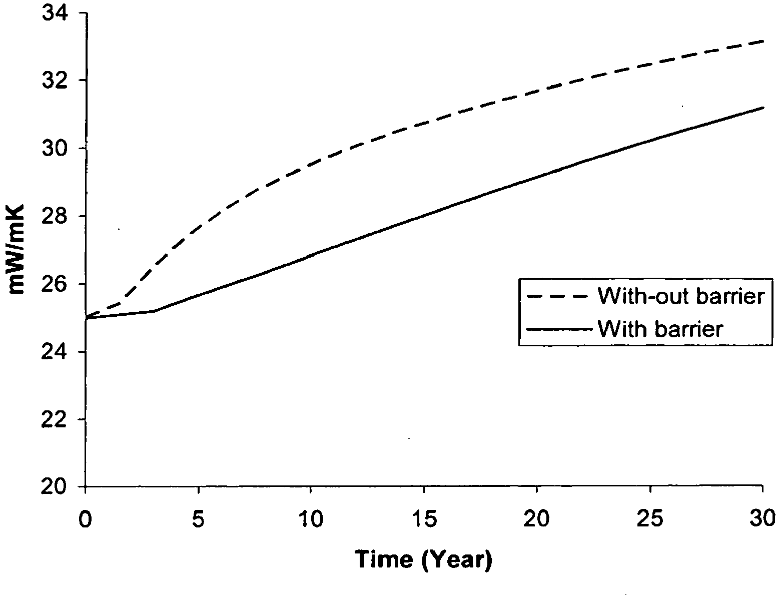

Throughout the present document the following abbreviations for units are used:
- "mm" is "millimetre" or "millimetres.
- "my" is 0,000001 metres
- "cm3" is cubic centimetres
- "m2" is square metres
- "24h" is twenty four hours
- "atm" is atmospheres (equal to Bar)
- "g" is grams or 0,001 Kilograms
- "mW/mK" is milliWatt per meter per Kelvin (or 0,001 W/mK)

It is to be understood that the invention as disclosed in the description may be modified and changed and still be within the scope of the invention as claimed hereinafter.

## Claims

1. A pre-insulated pipe for e.g. district heating, district cooling etc., said pipe comprising a medium conveying pipe, an insulating material surrounding at least a part of the length of the medium conveying pipe and a jacket pipe at least partly surrounding the insulating material, wherein the pre-insulated pipe comprises a layer of polymeric material at least partly surrounding the insulating material, the layer of polymeric material comprising at least one layer of a material or combination of materials being permeable to water or water vapour and having significantly better properties than PE (polyethylene) for resistance against diffusion of oxygen and carbon dioxide, **characterized in that** said material or combination of materials includes at least the material EVOH (ethylene vinyl alcohol).

2. A pre-insulated pipe according to claim 1, **characterized in that** the layer of polymeric material further comprises OPA (oriented polyamide), PETP (polyethylene terephtalate), PE (polyethylene) or a combination thereof.

3. A pre-insulated pipe according to any of claims 1 - 2, **characterized in that** the polymeric material is a laminate including two or more layers, said layers including at least one layer of OPA, PETP, PE or a combination thereof, including one of the combinations PETP-EVOH/PE and OPA/PA-EVOH-PA/PE.

4. A pre-insulated pipe according to any of claims 1 - 3, **characterized in that** the layer of polymeric material is in the form of a film having a thickness below 1 mm and preferably below 0,1 mm.

5. A pre-insulated pipe according to claim 4, **characterized in that** the film is arranged between the insulating material and the jacket pipe.

6. A pre-insulated pipe according to claim 5, **characterized in that** the film is applied onto the outer surface of the insulating material and/or onto the inner surface of the jacket pipe.

7. A pre-insulated pipe according to one of claims 4 - 6, **characterized in that** the film includes a layer of PE on at least one side for adhering the film to the insulating material and/or to the jacket pipe.

8. A pre-insulated pipe according to one of claims 1 - 2, **characterized in that** the medium conveying pipe is made from PP (polypropylene), PB (polybutylene), cross-linked PP or PE (PEX) or, PE, ABS (acrylonitrile butadiene styrene).

9. A pre-insulated pipe according to any of the preceding claims, **characterized in that** the jacket pipe is made from PE or co-polymerizates of ethylene and butyl acryl ate (EBA) or any other polymeric material being permeable to water or water vapour.

10. A pre-insulated pipe according to any of the preceding claims, **characterized in that** the insulating material comprises a foamed polymeric material, such as polyurethane (PUR) or any polyurethane composition.

11. A use of a pre-insulated pipe according to any of the preceding claims 1-10, where said pipe is integrated in a system providing district heating or district cooling.

## Patentansprüche

1. Vorisoliertes Rohr für z.B. Fernwärme, Fernkälte usw., wobei das Rohr eine Fördermediumleitung, einen Dämmstoff, der mindestens einen Teil der Länge der Fördermediumleitung umgibt, und ein Mantelrohr, das mindestens teilweise den Dämmstoff umgibt, umfasst, wobei das vorisolierte Rohr eine Schicht aus Polymermaterial umfasst, das den Dämmstoff mindestens teilweise umgibt, wobei die Schicht aus Polymermaterial mindestens eine Schicht aus einem Material oder einer Kombination von Materialien umfasst, die für Wasser oder Wasserdampf durchlässig sind und deutlich bessere Eigenschaften als PE (Polyethylen) zur Beständigkeit gegen Diffusion von Sauerstoff und Kohlendioxid aufweisen, **dadurch gekennzeichnet, dass** das Material oder die Kombination von Materialien mindestens das Material EVOH (Ethylenvinylalkohol) umfasst.

2. Vorisoliertes Rohr nach Anspruch 1, **dadurch gekennzeichnet, dass** die Schicht aus Polymermaterial ferner OPA (orientiertes Polyamid), PETP (Polyethylenterephtalat), PE (Polyethylen) oder eine Kombination davon umfasst.

3. Vorisoliertes Rohr nach einem der Ansprüche 1-2, **dadurch gekennzeichnet, dass** das Polymermaterial ein Laminat umfassend zwei oder mehr Schichten ist, wobei die Schichten mindestens eine Schicht aus OPA, PETP, PE oder einer Kombination davon, einschließlich einer der Kombinationen von PETP-EVOH/PE und OPA/PA-EVOH-PA/PE, umfassen.

4. Vorisoliertes Rohr nach einem der Ansprüche 1-3, **dadurch gekennzeichnet, dass** die Schicht aus Polymermaterial in Form einer Folie mit einer Dicke von weniger als 1 mm und vorzugsweise von weniger als 0,1 mm vorliegt.

5. Vorisoliertes Rohr nach Anspruch 4, **dadurch gekennzeichnet, dass** die Folie zwischen dem Dämmstoff und dem Mantelrohr angeordnet ist.

6. Vorisoliertes Rohr nach Anspruch 5, **dadurch gekennzeichnet, dass** die Folie auf die Außenfläche des Dämmstoffes und/oder auf die Innenfläche des Mantelrohrs aufgetragen ist.

7. Vorisoliertes Rohr nach einem der Ansprüche 4-6, **dadurch gekennzeichnet, dass** die Folie eine Schicht aus PE auf mindestens einer Seite umfasst, um die Folie an dem Dämmstoff und/oder an dem Mantelrohr zu haften.

8. Vorisoliertes Rohr nach einem der Ansprüche 1-2, **dadurch gekennzeichnet, dass** die Fördermediumleitung aus PP (Polypropylen), PB (Polybutylen), vernetztem PP oder PE (PEX) oder PE, ABS (Acrylonitrilbutadienstyrol) gefertigt ist.

9. Vorisoliertes Rohr nach einem der vorgehenden Ansprüche, **dadurch gekennzeichnet, dass** das Mantelrohr aus PE oder Co-Polymerisaten aus Ethylen und Butylacrylat (EBA) oder irgendeinem anderen Polymermaterial, das für Wasser oder Wasserdampf durchlässig ist, gefertigt ist.

10. Vorisoliertes Rohr nach einem der vorgehenden Ansprüche, **dadurch gekennzeichnet, dass** der Dämmstoff ein geschäumtes Polymermaterial, wie beispielsweise Polyurethan (PUR), oder irgendeine Polyurethanzusammensetzung umfasst.

11. Verwendung eines vorisolierten Rohrs nach einem der vorgehenden Ansprüche 1-10, wobei das Rohr in einem System zum Bereitstellen von Fernwärme oder Fernkälte eingebettet ist.

## Revendications

1. Tuyau pré-isolé pour par exemple le chauffage urbain, le refroidissement urbain, etc., ledit tuyau comprenant un tuyau de transport de milieu, un matériau isolant entourant au moins une partie de la longueur du tuyau de transport de milieu et un tuyau de chemise entourant au moins partiellement le matériau isolant, le tuyau pré-isolé comprenant une couche de matériau polymère entourant au moins partiellement le matériau isolant, la couche de matériau polymère comprenant au moins une couche d'un matériau ou d'une combinaison de matériaux perméable à l'eau ou à la vapeur d'eau et présentant des propriétés nettement supérieures à celles du PE (polyéthylène) pour la résistance à la diffusion de l'oxygène et du dioxyde de carbone, **caractérisé en ce que** ledit matériau ou ladite combinaison de matériaux comprend au moins le matériau EVOH (éthylène vinyle alcool).

2. Tuyau pré-isolé selon la revendication 1, **caractérisé en ce que** la couche de matériau polymère comprend en outre OPA (polyamide orienté), PETP (polyéthylène téréphtalate), PE (polyéthylène) ou une combinaison de ceux-ci.

3. Tuyau pré-isolé selon l'une quelconque des revendications 1 à 2, **caractérisé en ce que** le matériau polymère est un stratifié comprenant deux couches ou plus, lesdites couches comprenant au moins une couche d'OPA, de PETP, de PE ou une combinaison de ceux-ci, y compris l'une des combinaisons de PETP-EVOH/PE et d'OPA/PA-EVOH-PA/PE.

4. Tuyau pré-isolé selon l'une quelconque des revendications 1 à 3, **caractérisé en ce que** la couche de matériau polymère se présente sous la forme d'un film ayant une épaisseur inférieure à 1 mm et de préférence inférieure à 0,1 mm.

5. Tuyau pré-isolé selon la revendication 4, **caractérisé en ce que** le film est disposé entre le matériau isolant et le tuyau de chemise.

6. Tuyau pré-isolé selon la revendication 5, **caractérisé en ce que** le film est appliqué sur la surface extérieure du matériau isolant et / ou sur la surface intérieure du tuyau de chemise.

7. Tuyau pré-isolé selon l'une des revendications 4 à 6, **caractérisé en ce que** le film comprend une couche de PE sur au moins un côté pour faire adhérer le film au matériau isolant et / ou au tuyau de chemise.

8. Tuyau pré-isolé selon l'une des revendications 1 à 2, **caractérisé en ce que** le tuyau de transport de milieu est réalisé en PP (polypropylène), PB (polybutylène), PP réticulé ou PE (PEX) ou, PE, ABS (acrylonitrile butadiène styrène).

9. Tuyau pré-isolé selon l'une quelconque des revendications précédentes, **caractérisé en ce que** le tuyau de chemise est réalisé en PE ou copolymères d'éthylène et d'acrylate de butyle (EBA) ou de tout autre matériau polymère perméable à l'eau ou à la vapeur d'eau.

10. Tuyau pré-isolé selon l'une quelconque des revendications précédentes, **caractérisé en ce que** le matériau isolant comprend un matériau polymère de mousse, tel que du polyuréthane (PUR) ou toute composition de polyuréthanne.

11. Utilisation d'un tuyau pré-isolé selon l'une quelconque des revendications précédentes 1 à 10, dans laquelle ledit tuyau est intégré dans un système fournissant un chauffage urbain ou un refroidissement urbain.
